# EUROPEAN PATENT SPECIFICATION

(11) **EP 2 062 760 B1**
(45) Date of publication and mention of the grant of the patent: **15.06.2011**
(21) Application number: 07425742.9
(22) Date of filing: 23.11.2007
(51) Int. Cl.: B60K 37/06

(54) **A method for assembling a control board for vehicle dashboards**
Verfahren zur Herstellung eines Bedienungsfelds für Fahrzeuginstrumententafel
Procédé d'assemblage d'un panneau de commande pour tableaux de bord de véhicule

(43) Date of publication of application: 27.05.2009
(73) Proprietor: DENSO THERMAL SYSTEMS S.p.A., 10046 Poirino (Torino) (IT)
(72) Inventor: Nicole', Fabrizio, 10046 Poirino (Torino) (IT)
(74) Representative: Quinterno, Giuseppe

(56) References cited:
- DE-A1- 3 535 881
- DE-C1- 4 131 340
- US-A- 5 227 222

## Description

The present invention relates to a method for assembling a control board for vehicle dashboards.

The invention has been developed with particular reference to control boards for air-treatment systems, comprising a plurality of control members associated to respective symbols that can be lit up. For example, the control members enable selection of the temperature and the air flow rate, the direction of arrival of the air (recirculation or intake of air from outside), and the direction of the air flow within the passenger compartment of the vehicle. The symbols associated to each control member provide a visual indication of the position of the respective control member. Typically, said symbols have colourings different from one another when they are lit up.

In the known solutions, the control board has a front part and a rear part. Impressed on the front part are the symbols that can be lit up associated to respective control members. Set on the rear part is at least one light guide and, between the light guide and the internal surface of the control board, set in a position corresponding to the symbols is a coloured filter.

DE 4131340 C discloses a known method for assembling such a control board.

Positioning of the coloured filter between the light guide and the internal surface of the control board is a critical step. According to a known solution, the coloured filter is drawn and is provided with fins orthogonal to the principal plane of the filter. The filter is positioned on the internal surface of the control board and subsequently, the light guide is set on the internal part of the control board and is permanently fixed to the latter, for example by means of ultrasound welding.

Experience has shown that this operation is critical in so far as it frequently happens that some fins of the coloured filter are pinched between the light guide and the internal surface of the control board. When this occurs, the entire control board has to be discarded because it is no longer possible to remove the light guide to re-position the coloured filter correctly given that the light guide is fixed in a permanent way to the control board.

The purpose of the present invention is to provide a method for assembling a control board that will not be affected by the aforesaid drawbacks. A further purpose of the present invention is to render simpler and faster the operations of assembly of the control board.

According to the present invention, the above purposes are achieved by a method having the characteristics forming the subject of Claim 1.

The characteristics and advantages of the method according to the present invention will emerge clearly from the ensuing detailed description, which is provided purely by way of non-limiting example, with reference to the annexed plate of drawings, in which:
- Figure 1 is a perspective view of the front part of a control board for a dashboard of a vehicle; and
- Figures 2 and 3 are perspective views that illustrate schematically the sequence of assembly of light guides and coloured filters on the control board of Figure 1.

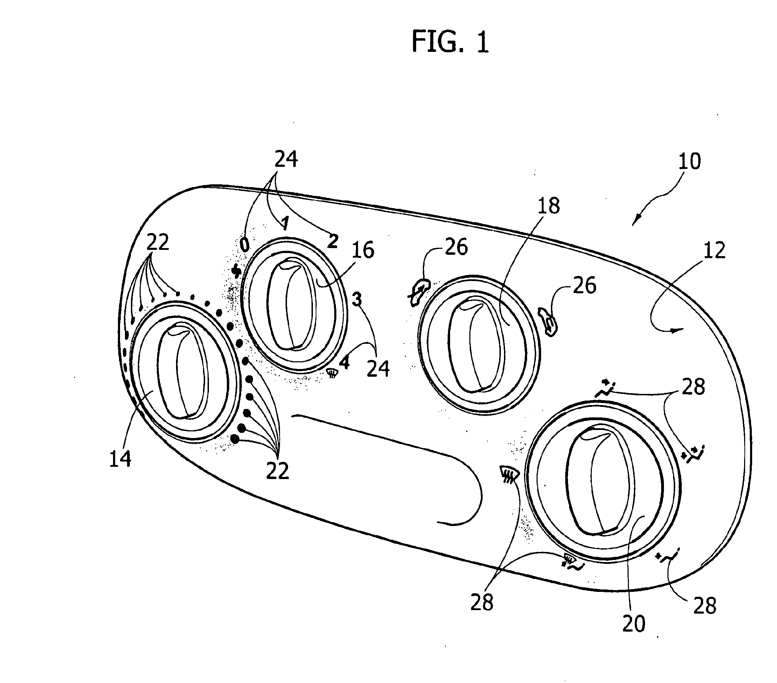

With reference to Figure 1, designated by 10 is a control board for a dashboard of a vehicle. The control board 10 has a front part 12 on which a plurality of control members (knobs) 14, 16, 18, 20 is arranged that has the purpose of controlling different functions of an air-treatment assembly of the vehicle. In the example illustrated in Figure 1, the control member 14 has the purpose of regulating the temperature of the air flow, the control member 16 has the purpose of regulating the rate of the fan, the control member 18 has the purpose of selecting the direction of arrival of the air flow (intake of air from outside or recirculation), and the control member 20 has the purpose of selecting the direction of exit of the air flow (front outlets, feet, defrosting, etc.). The function and the position of the control members have no bearing upon the present invention.

The control members 14, 16, 18, 20 are associated to respective symbols 22, 24, 26, 28 impressed on the front face of the control board 10. The symbols 22, 24, 26, 28 provide a visual indication of the position of the respective control member 14, 16, 18, 20. The symbols 22, 24, 26, 28 can be lit up and, in the illuminated condition, have colourings different from one another. According to a technique in itself conventional, the different colouring of the symbols 22, 24, 26, 28 is obtained by positioning coloured filters on a rear surface of the control board 10, arranged in a position corresponding to the symbols 22, 24, 26 and 28.

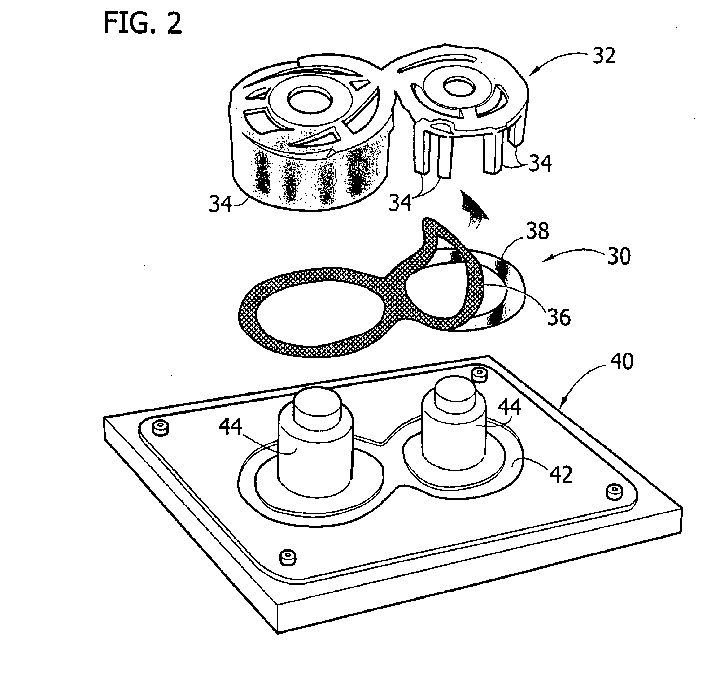

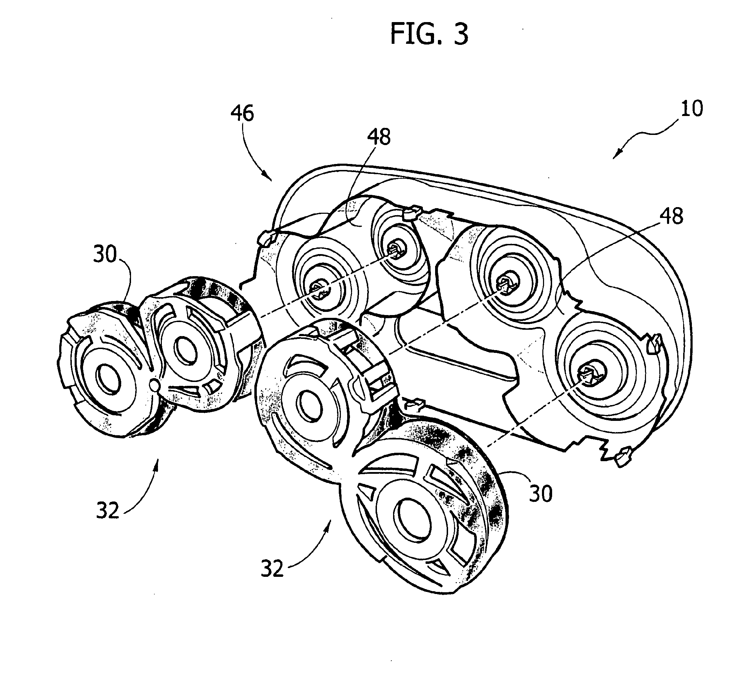

Figures 2 and 3 are schematic illustrations of the sequence of operations for assembling the control board 10.

With initial reference to Figure 2, designated by 30 is a coloured filter designed to be applied on a rear surface of the control board 10. The coloured filter 30 is made of a thin film cut according to a shape corresponding to the area on which the symbols associated thereto are impressed and has a colouring corresponding to the one that it is desired to obtain for the corresponding symbols. Designated by 32 in Figure 2 is a light guide formed, in a way in itself known, by a body made of plastic material with high transparency. The light guide 32 has illuminating surfaces 34, which are designed to be located in a position corresponding to the respective symbols 22, 24, 26, 28.

According to the present invention, the coloured filter 30 has an adhesive surface 38 protected by a removable film 36. The adhesive surface 38 is applied on the illuminating surfaces 34 of the light guide 32 so as to enable gluing of the filter 30 to the light guide 32.

To simplify gluing of the filter 30 to the light guide 32, a positioning template 40 is provided, having a seat 42 in which the coloured filter 30 is positioned. The template 40 is provided with contrast members 44 that have the purpose of positioning the light guide 32. The contrast members 44 are able to slide with respect to the template 40 along their axis (oriented in a vertical direction) to enable gluing of the film 30 on the light guide 32.

In a first step of the method according to the invention, the coloured filter 30 is positioned in the seat 42 of the template 40, with the adhesive surface 38 facing upwards. The protective film 36 is then removed, and then the light guide 32 is positioned on the template 40 by bringing the illuminating surfaces 34 of the light guide 32 in contact with the adhesive surface 38 of the coloured filter 30. In this step, the light guide 32 is pushed downwards thanks to the sliding of the contrast members 44.

In a subsequent step (illustrated in Figure 3), the light guides 32 on which respective coloured filters 30 have been previously glued are positioned on the rear part 46 of the control board 10. The rear part of the control board 10 is equipped, in a known way, with seats 48 for housing the light guides 32. The light guides 32 are positioned within the seats 48, and the assembly is completed by hot plate welding or ultrasound welding of the light guides 32 to the control board 10.

During assembly of the light guides 32 in the seats 48 of the control board 10, it is not necessary to ensure proper positioning in the seats 48 of the coloured filters 30, given that said filters have already been correctly positioned and fixed to the surfaces 34 of the light guides 32 by means of the gluing described previously, performed on the template 40.

The method according to the present invention eliminates completely the possibility of incorrect positioning of the coloured filters 30 in the seats 48 of the control board 10, an operation that is very delicate and critical from the standpoint of the quality of the finished product. The sequence of assembly of the method according to the present invention renders faster and easier assembly of the coloured filters and of the light guides, and considerably reduces the number of pieces wasted due to a wrong positioning of the coloured filters 30.

## Claims

1. A method for assembling a control board (10) for a dashboard of a vehicle, the control board (10) having a front part (12) and a rear part (46), in which impressed on the front part (12) are a plurality of symbols that can be lit up (22, 24, 26, 28) associated to respective control members (14, 16, 18, 20) and in which located on the rear part (46) of the control board (10) is at least one light guide (32) and in which, in a position corresponding to said symbols (22, 24, 26, 28), set between the light guide (32) and an internal surface of the control board (10) is at least one coloured filter (30) which is glued on an illuminating surface (34) of the light guide (32),
the method being **characterized in that** said coloured filter (30) is formed by a thin film having an adhesive surface (38) protected by a removable film (36), that gluing of the coloured filter (30) to the light guide (32) is performed prior to assembly of the light guide (32) on the control board (10) by positioning the coloured filter (30) on a positioning template (40) having a seat (42) for positioning the coloured filter (30), and contrast members (44) for positioning the light guide (32) and that gluing of the coloured filter (30) to the light guide (32) is performed by pressing the illuminating surfaces (34) of the light guide (32) against the adhesive surface (38) of the coloured filter (30) on said positioning template (40).

2. The method according to claim 1, **characterized in that** after gluing of the coloured filter (30) to the light guide (32), the light guide is positioned in a corresponding seat (48) provided on the rear part of the control board (10), the light guide being then fixed by means of hot plate welding or ultrasound welding to the control board (10).

## Patentansprüche

1. Verfahren zum Montieren einer Steuerungstafel (10) für eine Instrumententafel eines Fahrzeugs, wobei die Steuerungstafel (10) ein Vorderteil (12) und ein Rückteil (46) hat, wobei eine Vielzahl von Symbolen (22, 24, 26, 28) in das Vorderteil (12) geprägt sind, die in Verbindung mit jeweiligen Steuerungsbauteilen (14, 16, 18, 20) aufleuchten können, wenigstens eine Lichtführung (32) an dem Rückteil (46) der Steuerungstafel (10) angeordnet ist, und in einer Position korrespondierend zu den Symbolen (22, 24, 26, 28) wenigstens ein gefärbter Filter (30), der an eine Beleuchtungsfläche (34) der Lichtführung (32) geklebt ist, zwischen der Lichtführung (32) und einer Innenfläche der Steuerungstafel (10) angeordnet ist,
wobei das Verfahren **dadurch gekennzeichnet ist, dass**
der gefärbte Filter (30) aus einem dünnen Film mit einer Klebefläche (38) ausgebildet ist, die durch einen entfernbaren Film (36) geschützt ist,
ein Kleben des gefärbten Filters (30) an die Lichtführung (32) vor einer Montage der Lichtführung (32) an der Steuerungstafel (10) durch Positionieren des gefärbten Filters (30) an einer Positionierungsschablone (40) mit einem Sitz (42) zum Positionieren des gefärbten Filters (30) und Kontrastbauteilen (44) zum Positionieren der Lichtführung (32) durchgeführt wird, und
ein Kleben des gefärbten Filters (30) an die Lichtführung (32) durch Drücken der Beleuchtungsflächen (34) der Lichtführung (32) gegen die Klebefläche (38) des gefärbten Filters (30) an der Positionierungsschablone (40) durchgeführt wird.

2. Verfahren nach Anspruch 1, **dadurch gekennzeichnet, dass**, nach Kleben des gefärbten Filters (30) an die Lichtführung (32), die Lichtführung in einem entsprechenden Sitz (48) positioniert wird, der an dem Rückteil der Steuerungstafel (10) vorgesehen ist, und die Lichtführung dann mittels Heizelementschweißen oder Ultraschallschweißen an der Steuerungstafel (10) fixiert wird.

## Revendications

1. Procédé pour assembler un panneau de commande (10) pour un tableau de bord d'un véhicule, le panneau de commande (10) ayant une partie avant (12) et une partie arrière (46), dans lequel, imprimés sur la partie avant (12), on trouve une pluralité de symboles qui peuvent être éclairés (22, 24, 26, 28) associés aux éléments de commande (14, 16, 18, 20) respectifs, et dans lequel, positionné sur la partie arrière (46) du panneau de commande (10), on trouve au moins un guide de lumière (32) et dans lequel, dans une position correspondant auxdits symboles (22, 24, 26, 28), placé entre le guide de lumière (32) et une surface interne du panneau de commande (10), on trouve au moins un filtre coloré (30) qui est collé sur une surface d'éclairage (34) du guide de lumière (32),
le procédé étant **caractérisé en ce que** ledit filtre coloré (30) est formé par un film fin ayant une surface adhésive (38) protégée par un film amovible (36), **en ce que** le collage du filtre coloré (30) sur le guide de lumière (32) est réalisé avant l'assemblage du guide de lumière (32) sur le panneau de commande (10) en positionnant le filtre coloré (30) sur un gabarit de positionnement (40) ayant un siège (42) pour positionner le filtre coloré (30), et des éléments de contraste (44) pour positionner le guide de lumière (32) et **en ce que** le collage du filtre coloré (30) sur le guide de lumière (32) est réalisé en comprimant les surfaces d'éclairage (34) du guide de lumière (32) contre la surface adhésive (38) du filtre coloré (30) sur ledit gabarit de positionnement (40).

2. Procédé selon la revendication 1, **caractérisé en ce qu'**après avoir collé le filtre coloré (30) sur le guide de lumière (32), le guide de lumière est positionné dans un siège (48) correspondant prévu sur la partie arrière du panneau de commande (10), le guide de lumière étant ensuite fixé au moyen d'un soudage par plaque chaude ou un soudage par ultrasons sur le panneau de commande (10).
